Europäisches Patentamt

European Patent Office

Office européen des brevets

(19)

(11) Veröffentlichungsnummer: **0 238 919**
**B1**

(12) EUROPÄISCHE PATENTSCHRIFT

(45) Veröffentlichungstag der Patentschrift:
24.01.90

(51) Int. Cl.⁴: **F16F 1/54, B60K 5/12**

(21) Anmeldenummer: **87103294.2**

(22) Anmeldetag: **07.03.87**

(54) Lageranordnung für ein Motorantriebsaggregat.

(30) Priorität: **20.03.86  DE 3609411**

(43) Veröffentlichungstag der Anmeldung:
**30.09.87 Patentblatt 87/40**

(45) Bekanntmachung des Hinweises auf die Patenterteilung:
**24.01.90 Patentblatt 90/4**

(84) Benannte Vertragsstaaten:
**DE FR GB IT SE**

(56) Entgegenhaltungen:
**DE-B- 1 204 948**
**DE-B- 1 750 152**
**DE-B- 2 909 934**
**US-A- 4 392 640**

(73) Patentinhaber: **Adam Opel Aktiengesellschaft,
Bahnhofsplatz 1 Postfach 17 10,
D-6090 Rüsselsheim(DE)**

(72) Erfinder: **Schmitt, Egon, Ing.grad.,
Thomas-Mann-Strasse 5, D-6085 Nauheim(DE)**

(74) Vertreter: **Elbert, Karl, Dipl.-Ing. et al, Adam Opel
Aktiengesellschaft Bahnhofplatz 1 Postfach 17 10,
D-6090 Rüsselsheim(DE)**

**Beschreibung**

Die Erfindung betrifft eine Lageranordnung für ein Motorantriebsaggregat, insbesondere bei Kraftfahrzeugen, mit einem inneren keilförmigen Metallteil und einem in Abstand zum keilförmigen Metallteil symmetrisch angeordneten äußeren rahmenartigen Metallteil, wobei gesonderte Elastomerelemente zwischen dem inneren und dem äußeren Metallteil angeordnet sind.

Eine derartige Lageranordnung ist beispielsweise aus der US-A 4 392 640 bekannt. Bei ihr sind Elastomerelemente vorgesehen, die so zwischen dem keilförmigen Metallteil und dem rahmenartigen Metallteil angeordnet sind, daß die Wirkachsen der Elastomerelemente zusammenfallen.

Es hat sich gezeigt, daß es bei mit derartigen Lageranordnungen ausgestatteten Kraftfahrzeugen mit Front- oder Heckantrieb unter bestimmten Fahrbedingungen zu einer störenden Vibration auf die Fahrzeuginsassen kommen kann. Diese entsteht insbesondere beim Befahren von Straßen mit einem harmonischen Profil, beispielsweise beim Überfahren von Betonplatten mit Stoßfugen, es kommt dabei im Frequenzbereich von 8 bis 15 Hz zu harmonischen Schwingungen des in den Elastomerelementen gelagerten Antriebsaggregates. Aufgrund der Massen- und Steifigkeitsverhältnisse liegt die Eigenfrequenz des Aggregates im Frequenzbereich von 8 bis 15 Hz. Trifft nun die Eigenfrequenz der Motorlagerung auf das Maximum der Straßenanregung, so kommt es in diesem Fahrbereich zu einer starken Überhöhung der Motorbewegung bzw. Motorbeschleunigung in Vertikalrichtung. Diese Beschleunigung überträgt sich auf die Karosserie und somit auf die Insassen, was den Fahrkomfort stark negativ beeinflußt.

Eine Möglichkeit, die geschilderten Vertikalschwingungen des Motors zu verhindern, besteht darin, eine harte Motoraufhängung zu wählen, d.h. Elastomerelemente hoher Steifigkeit zu verwenden, durch die die Wege des Antriebsaggregates reduziert werden und die Resonanzfrequenz der Aufhängung zu höheren Frequenzen und somit aus dem Maximum der Straßenanregung verschoben wird. Eine weitere einfache Möglichkeit zur Schwingungsreduzierung ist die Verwendung von Aufhängungselementen mit Dämpfung am Elastomer. Da jedoch die Elastomerelemente gleichzeitig für die Isolation der vom Motor abgegebenen 2. Ordnung Zündfrequenz (beim 4-Zylinder-Motor 1000 - 6000/min = 33 -200 Hz) verantwortlich sind, sind derartige Lösungsmöglichkeiten nicht realisierbar, denn es sind für eine Isolation der 2. Ordnung Zündfrequenz weiche Elastomerelemente mit niedriger dynamischer Federrate erforderlich. Elemente mit Dämpfung führen ebenfalls zu einer deutlichen Erhöhung der dynamischen Federrate. So läßt sich im Versuch bei einer bestimmten Elastomerqualität eine gute Akustik nachweisen bei folgenden Versuchsergebnissen: Statische Einfederung $1_m$ = 3,05mm bei einer statischen Beanspruchung $F_m$= 600N, dynamische Federrate K = 406 N/mm bei einer Amplitude der dynamischen Einfederung $1_o$ = ± 0,5mm und einem Verlustwinkel $\delta$ = 3,4° bei einer Frequenz von 15Hz. Eine wesentliche Verschlechterung der Akustik ist bereits bei folgenden Versuchsergebnissen zu verzeichnen: Statische Einfederung $1_m$ = 2,9mm bei gleicher statischer Beanspruchung $F_m$, dynamische Federrate K = 494 bei gleicher Amplitude der dynamischen Einfederung $1_o$, Verlustwinkel $\delta$ = 7° bei gleicher Frequenz. Die beiden Versuchsergebnisse verdeutlichen, daß die Verwendung von den bekannten hochdämpfenden Elastomerqualitäten bei Motorlagern zu einer akustisch problematischen Erhöhung der dynamischen Federrate K führt, bei gleichzeitiger Verbesserung der niederfrequenten Schwingungsprobleme. Die Zunahme des Verlustwinkels $\delta$ um 108% entspricht dabei einem Anwachsen der dynamischen Federrate K um 20%.

Es ist Aufgabe vorliegender Erfindung, eine Lageranordnung der genannten Art zu schaffen, bei der durch eine gezielte geometrische Gestaltung des Lagers eine örtliche Erhöhung der Dämpfung im niederfrequenten Bereich erzielt wird.

Gelöst wird die Aufgabe dadurch, daß die Elastomerelemente mit ihren Wirkungsachsen in Längsachse der Lageranordnung gegeneinander versetzt sind. Durch eine derartige Anordnung der Elastomerelemente treten in den Elastomerelementen Drehschwingungen, speziell im Frequenzbereich von 8 bis 30 Hz auf. Diese Drehschwingungen führen zu einer Anhebung der Dämpfungseigenschaften in einem bestimmten Frequenzbereich, wie es zum Entgegenwirken der Unruhe der Karosserie wünschenswert ist. Durch die Verwendung von Elastomer mit minimaler Dämpfung sind keine akustischen Nachteile vorhanden, durch die Verwendung von niedrigdämpfendem Elastomer wird kein Einfluß auf die akustisch relevante dynamische Federrate K ausgeübt. Durch die Wahl von Elastomerqualität, Achsversatz sowie weiteren Geometriegrößen ist weiterhin die Frequenzlage der Dämpfungsanhebung als auch die Größe der Dämpfungsanhebung steuerbar.

Weitere Merkmale der Erfindung sind Gegenstand der Unteransprüche.

Die Erfindung wird im folgenden anhand von Figuren, einer Tabelle sowie Diagrammen näher erläutert, wobei darauf hingewiesen wird, daß alle Einzelmerkmale und alle Kombinationen erfindungswesentlich sind.

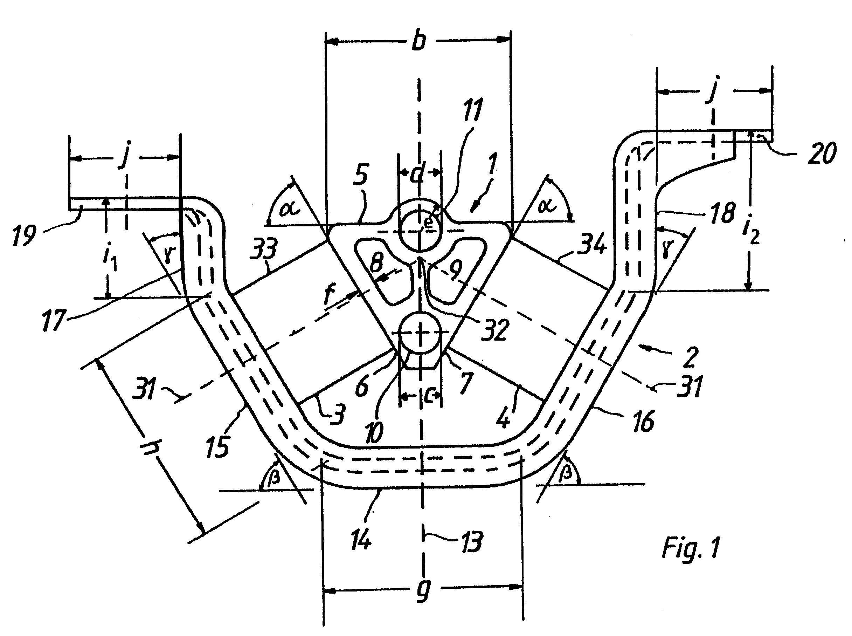

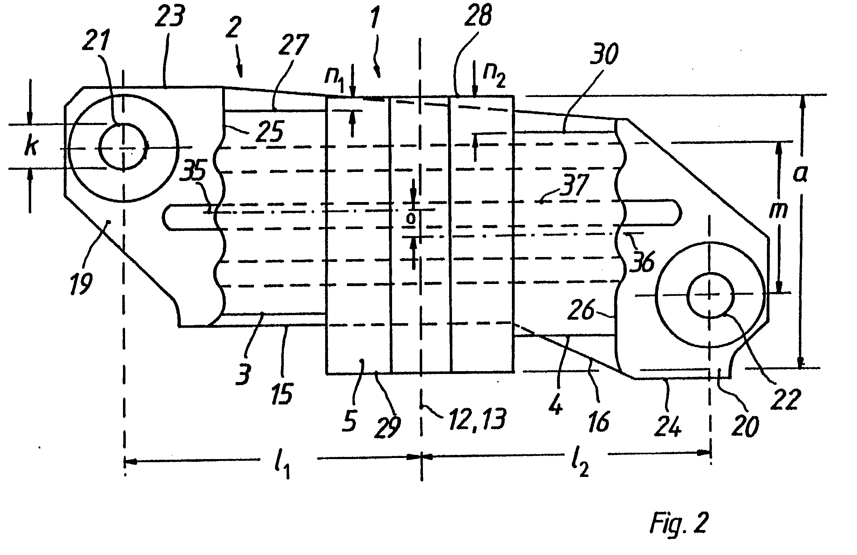

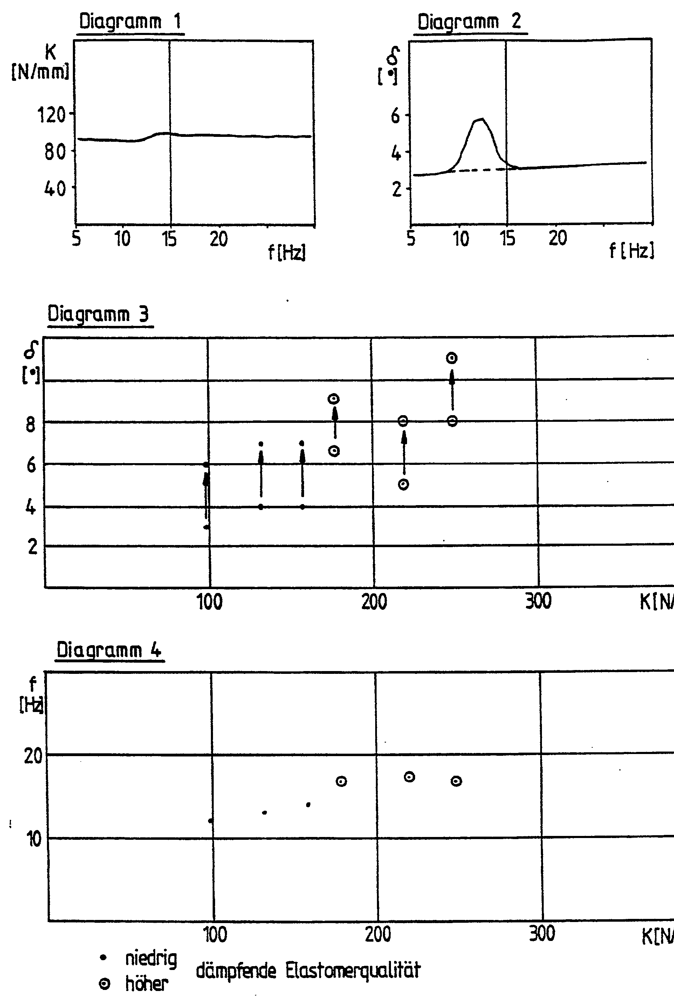

Die erfindungsgemäße Lageranordnung ist in Figur 1 in einer Vorderansicht und in Figur 2 in einer Draufsicht gezeigt. Das Lager besitzt ein inneres, keilförmiges Metallteil 1, das den motorseitigen Anschluß darstellt, sowie ein äußeres, etwa U-förmig gewölbtes Metallteil 2, das den karosserieseitigen Anschluß darstellt, wobei zwischen den beiden Metallteilen 1 und 2 zwei Elastomerstege 3, 4 angeordnet sind, die mit den Metallteilen 1, 2 in bekannter Art und Weise fest haftend verbunden sind.

Im Detail betrachtet, ist das keilförmige Metallteil 1 als längliches Gebilde ausgeführt, mit einer Länge a = 68mm, es weist einen dreieckigen Querschnitt auf, wobei die Außenflächen 5, 6 und 7 einen Winkel $\alpha$

von 60° zueinander einschließen, bei einer Schenkellänge b = 45 mm. In Längsrichtung des Metallteiles 1 sind zwei Ausnehmungen 8, 9 sowie zwei Bohrungen 10, 11 vorgesehen, die Bohrung, Durchmesser c = 10mm, befindet sich im Bereich der zwischen den Außenflächen 6, 7 gebildeten Spitze des Metallteiles 1, parallel zu dessen Längsachse 12, die andere Bohrung 11, Durchmesser d = 10mm, in der Mitte der der Spitze gegenüberliegenden Außenfläche 5, wobei diese Außenfläche 5 im Bereich der Bohrung 11 geringfügig nach außen gewölbt ist, Radius e = 8mm. Das Metallteil 1 ist somit symmetrisch bezüglich der durch die Bohrungen 10, 11 verlaufenden Symmetrielinie 13 aufgebaut, die Bohrungen 10, 11 dienen der Aufnahme von nicht näher dargestellten Bolzen, um den Motor direkt oder indirekt zu befestigen. Die Ausnehmungen 8, 9 verlaufen parallel zu den Bohrungen 10, 11, sie sind symmetrisch bezüglich der Symmetrielinie 13 angeordnet und weisen etwa nierenförmigen Querschnitt auf, wobei eine Wandstärke f = 4mm jeweils zwischen den Ausnehmungen 8 und 9, den Ausnehmungen 8 bzw. 9 und den Außenflächen 5 bzw. 6 bzw. 7, den Ausneh mungen 8 bzw. 9 und den Bohrungen 10 bzw. 11 verbleibt. Das äußere Metallteil 2 besteht aus einem Stegteil 14, Länge g = 48mm, im Querschnitt betrachtet, an das sich beidendig unter einem gleichen Winkel $\beta$ = 60° erste Schenkelteile 15 und 16, Länge h = 50mm, anschließen. An das dem Stegteil 14 abgewandte Ende der ersten Schenkelteile 15, 16 schließen sich unter einem Winkel $\gamma$ = 30° zweite Schenkelteile 17, 18 unterschiedlicher Länge $i_1$ = 25mm, $i_2$ = 40mm an, die parallel zueinander verlaufen. Das Stegteil 14 sowie die Schenkelteile 15 bis 18 weisen einen wellenförmigen Querschnitt auf. An die Enden der zweiten Winkel Schenkelteile 17, 18 schließen sich unter einem rechten Winkel voneinander weggerichtete dritte Schenkelteile 19, 20, Länge j = 27mm, an. Die dritten Schenkelteile 19, 20 weisen jeweils eine Bohrung 21, 22 auf, Bohrungsdurchmesser k = 11mm, bezüglich der Symmetrielinie 13 des Stegteiles 19, sowie der ersten und zweiten Schenkelteile 15 bis 18 beträgt der Abstand $1_1$ der Bohrungsmitte der Bohrung 21 70mm, der Abstand $1_2$ der Bohrung 22 71mm, die Bohrungsmitten der Bohrungen 21, 22 sind in Richtung der Längsachse 12 um m = 37mm versetzt. Die dritten Schenkelteile 19, 20 weisen in der Draufsicht gemäß Figur 2 betrachtet, grob gesehen einen Querschnitt eines rechtwinkligen Dreiecks auf, wobei die Schenkel 23 und 24 bzw. 25 und 26 parallel zueinander verlaufen, der eine Schenkel 23 an einem Ende des Teiles 2 und der andere Schenkel 24 am anderen Ende des Teiles 2 angeordnet ist, die Schenkel 25 und 26 mit den zweiten Schenkelteilen 17 bzw. 18 verbunden sind und die Bolzen 21, 22 in dem Teil der dritten Schenkelteile 19 bzw. 20 angeordnet sind, in dem die Schenkel 23 und 25 bzw. 24 und 26 den rechten Winkel miteinander bilden.

Die mit den beiden Metallteilen 1 und 2 verbundenen Elastomerstege 3, 4 sind quaderförmig mit Abmessungen von 50 x 31 x 27 mm ausgebildet, wobei die jeweils gegenüberliegenden Flächen, die durch die Abmessungen 50 x 31 mm gegeben sind, mit den Metallteilen 1 bzw. 2 verbunden sind. Die Befestigung der Elastomerstege 3 bzw. 4 erfolgt an den Außenflächen 6 bzw. 7 des Metallteiles 1, und zwar kommt die Stirnfläche 27 des Elastomersteges 3 parallel zur Stirnfläche 28 des Metallteiles 1 zu liegen, jedoch bezüglich dieser Stirnfläche 28 um ein Maß $n_1$ = 4mm in Richtung der gegenüberliegenden Stirnfläche 29 des Metallteiles 1 versetzt. Entsprechendes gilt für die Stirnfläche 30 des Elastomersteges 4, dieser ist jedoch um ein Maß $n_2$ = 9mm versetzt, so daß sich ein Achsversatz o der beiden Elastomerstege 3, 4 zueinander von 5mm ergibt. In der Darstellung der Figur 2 sind mit den Bezugsziffern 35 und 36 die Wirkachsen der Elastomerelemente 3 und 4 bezeichnet, die Ziffer 37 gibt die Quermittelebene des Metallteiles 1 wieder.

Die Elastomerstege 3, 4 sind bezüglich des Metallteiles 1 so angeordnet, daß die Symmetrielinie 31 der Elastomerstege 3 bzw. 4 die Symmetrielinie 13 des Metallteiles 1 in einem Punkt 32 schneidet, der identisch ist mit dem Punkt, der dadurch erzielt wird, daß man eine Gerade unter einem Winkel von 20° zur Außenfläche 5 gemäß der Darstellung in Figur 1 durch die durch die Außenflächen 5 und 6 bzw. 5 und 7 gebildete Kante legt.

Die Elastomerstege 3, 4 sind schließlich so bezüglich des Metallteiles 2 angeordnet, daß sowohl das Stegteil 14 und die ersten und zweiten Schenkelteile 15 bis 18 als auch die Elastomerstege 3, 4 und das Metallteil 1 sich symmetrisch zur Symmetrielinie 13 befinden, die Ebenen 33 bzw. 34 der Elastomerstege 3 bzw. 4 schneiden das Metallteil 2 nahe der Verbindungsstelle von den jeweiligen ersten und zweiten Schenkelteilen 15 und 17 bzw. 16 und 18.

Nachfolgend sind die mit der vorstehend detailliert beschriebenen Lageranordnung durchgeführten Versuche beschrieben und analysiert, wobei zum besseren Verständnis zunächst grundlegendes erörtert werden soll:

Die Versuche entsprechen der DIN 53 515. Anwendungsbereich dieser DIN ist die Prüfung von Elastomer-Fertigteilen für Motorfahrzeuge unter erzwungenen Schwingungen außerhalb der Resonanz im Temperaturbereich von minus 30°C bis plus 150°C. Zweck ist die Bestimmung der dynamischen Federrate K und des Verlustwinkels $\delta$. Diese Kenngrößen charakterisieren das Verhalten von dynamisch beanspruchten Elastomer-Fertigteilen, wie sie zur Dämpfung von Schwingungen verwandt werden.

Unter den nachfolgend verwendeten Begriffen soll dabei folgendes verstanden werden:

- Die statische Beanspruchung $F_m$ ist die konstante Kraft, mit der das zu prüfende Elastomer-Fertigteil in einer bestimmten Wirkrichtung beansprucht wird und die die mittlere Beanspruchung des Elastomer-Fertigteiles darstellt.

- Die statische Einfederung $l_m$ ist der Federweg des Elastomer-Fertigteiles unter der statischen Beanspruchung $F_m$ und wird in Wirkrichtung dieser Beanspruchung gemessen.

- Die Amplitude der dynamischen Einfederung $l_o$ ist der Maximalwert der Wegschwingung $l_o \cdot \sin\omega t$, die der statischen Einfederung $l_m$ in Wirkrichtung der Beanspruchung $F_m$ überlagert wird. Sie wird im folgenden kurz mit Amplitude $l_o$ bezeichnet.

- Die Beanspruchungsamplitude $F_a$ ist der Maximalwert der Beanspruchungsschwingung, die der statischen Beanspruchung $F_m$ infolge der Wegschwingung $l_o \cdot \sin\omega t$ überlagert wird. Ihre Wirkrichtung liegt ebenfalls in der der statischen Beanspruchung $F_m$.

- Die Einfederung 1 ist der Momentanwert des Federweges des Elastomer-Fertigteiles, der sich aus dem Zusammenhang von $l_m$ und $l_o \cdot \sin\omega t$ ergibt

$l = l_m + l_o \cdot \sin\omega t$.

- Die Beanspruchung F ergibt sich als Folge der Einfederung I zu

$F = F_m + F_a \cdot \sin(\omega t + \delta)$.

- Die Frequenz f ist die Frequenz der erzwungenen, sinusförmigen Schwingung. Kreisfrequenz $\omega = 2 \cdot \pi \cdot f$.

- Der Verlustwinkel $\delta$ gibt an, wie weit die Beanspruchung F der Einfederung I vorauseilt. Er ist ein Maß für das Dämpfungsvermögen von Elastomer-Fertigteilen gegenüber mechanischen Schwingungen.

- Die dynamische Federrate K ist ein Maß für die Steifigkeit von Elastomer-Fertigteilen unter dynamischer Beanspruchung.

Bei den Versuchen konnte anhand von sieben Keillagern mit unterschiedlichen Kennungen, d.h. Elastomerqualitäten (drei niedrigdämpfenden und vier höherdämpfenden), gezeigt werden, daß eine Anhebung des Verlustwinkels ausschließlich durch einen Achsversatz der Elastomerstege 3, 4 möglich ist.

Wie bereits bei der Beschreibung der Lageranordnung dargelegt wurde, betrug der Achsversatz 5mm, den Versuchen wurde eine statische Beanspruchung $F_m$ = 600 N sowie eine Amplitude der dynamischen Einfederung $l_o$ = ± 0,5mm zugrunde gelegt.

Bei einem ersten Versuch mit einer niedrigdämpfenden Elastomerqualität I ergab sich der in den Diagrammen 1 und 2 veranschaulichte Zusammenhang zwischen der Frequenz f und der dynamischen Federrate K, sowie zwischen der Frequenz f und dem Verlustwinkel $\delta$. Dem Diagramm 2 ist zu entnehmen, daß ohne Achsversatz der Verlustwinkel $\delta$ in einem Frequenzbereich von 5 - 30 Hz nur geringfügig von etwa 2,8° auf etwa 3,2° stetig ansteigt, während bei einem Lager mit einem Achsversatz die Kurve etwa bis zu einer Frequenz von 9 Hz und ab einer Frequenz von 17 Hz mit der Kurve für das Lager ohne Achsversatz identisch ist, zwischen 9 und 17 Hz jedoch der Verlustwinkel $\delta$ sprunghaft auf einen Wert von etwa 6° bei einer Frequenz von etwa 12 Hz ansteigt, während der Verlustwinkel bei einem Lager ohne Achsversatz bei 12 Hz etwa 3° beträgt, somit eine Steigerung um 3° zu verzeichnen ist. Das Diagramm 1 verdeutlicht für den Fall des Achsversatzes einen etwa konstanten Verlauf der dynamischen Federrate K mit einem geringfügigen Anstieg bei etwa 12 Hz, der Wert beträgt etwa 98 N/mm. Der Wert der dynamischen Federrate K ändert sich mit und ohne Achsversatz praktisch nicht. Entsprechend dem Geschilderten wurden auch für die anderen Elastomerqualitäten II bis VII K = f(f) und $\delta$ = f (f) ermittelt, wobei sich von der Tendenz her entsprechendes wie bei der Elastomerqualität I ergab. Die Tabelle 1 gibt die entscheidenden Zusammenhänge wieder, wobei der Vollständigkeit halber die Werte de Qualität I in die Tabelle mit aufgenommen wurde.

Das Diagramm 3 verdeutlicht die Abhängigkeit von Verlustwinkel $\delta$ und dynamischer Federrate K. Es ergibt sich, daß sowohl niedrig- als auch hochdämpfende Elastomerqualitäten die genannte Anhebung des Verlustwinkels $\delta$ erfahren.

Das Daigramm 4 zeigt, inwieweit die Frequenzlage durch die Elastomerqualität, die durch die dynamische Federrate K repräsentiert wird, steuerbar ist.

Tabelle 1

| Gummiqualität | | dynamische Federrate K (N/mm) | Zunahme des Verlustwinkels durch Achsversatz | | | Frequenz f im Verlustwinkelmaximum (Hz) |
|---|---|---|---|---|---|---|
| niedrig dämpfend | I | 98 | 3° | → | 6° | 12 |
| | II | 130 | 4° | → | 7° | 13 |
| | III | 158 | 4° | → | 7° | 14 |
| höher dämpfend | IV | 174 | 6,5° | → | 9° | 17 |
| | V | 217 | 5° | → | 8° | 17,5 |
| | VI | 249 | 8° | → | 11° | 17 |
| | VII | 366 | 6,5° | → | 11° | 27 |

## Patentansprüche

1. Lageranordnung für ein Motorantriebsaggregat, insbesondere bei Kraftfahrzeugen, mit einem inneren keilförmigen Metallteil (1) und einem im Abstand zum keilförmigen Metallteil symmetrisch angeordneten äußeren rahmenartigen Metallteil (2), mit gesonderten Elastomerelementen (3, 4) zwischen dem inneren und dem äußeren Metallteil, dadurch gekennzeichnet, daß die Elastomerelemente (3, 4) mit ihren Wirkungsachsen (35, 36) in Längsachse der Lageranordnung gegeneinander versetzt sind.

2. Lageranordnung nach Anspruch 1, dadurch gekennzeichnet, daß zwei quaderförmige, identische Elastomerelemente (3, 4) vorgesehen sind und die die Elastomerelemente (3, 4) aufnehmenden Flächen des inneren und des äußeren Metallteiles (6, 7; 15, 16) unter einem Winkel von 20 bis 40°, vorteilhaft 25 bis 35°, insbesondere 30° zur Lagerhauptachse (13) verlaufen.

3. Lageranordnung nach Anspruch 1 oder 2, dadurch gekennzeichnet, daß der Achsversatz (o) der Elastomerelemente (3, 4) 2 bis 12 mm, vorteilhaft 4 bis 6 mm, insbesondere 5 mm beträgt.

4. Lageranordnung nach einem der Ansprüche 1 bis 3, dadurch gekennzeichnet, daß die Lagerlänge des inneren Metallteiles (1) um das zwei- bis sechsfache des Achsversatzes (o), insbesondere das vierfache des Achsversatzes (o) größer ist als die Länge eines Elastomerelementes (3, 4).

5. Lageranordnung nach einem der Ansprüche 1 bis 4, dadurch gekennzeichnet, daß das äußere Metallteil (2) mit Ausnehmungen (21, 22) zum Verbinden des Metallteiles (2) mit einem Fahrzeugteil versehen ist, wobei die Ausnehmungen (21, 22) im Abstand zur Quermittelebene (37) angeordnet sind.

6. Lageranordnung nach einem der Ansprüche 1 bis 5, dadurch gekennzeichnet, daß das innere Metallteil (1) eine oder mehrere Ausnehmungen (10, 11) zum Verbinden des Metallteiles (1) mit dem Antriebsaggregat aufweist, wobei die Ausnehmung (10, 11) parallel zur Längsachse (12) des Metallteiles (1) verläuft.

7. Lageranordnung nach einem der Ansprüche 1 bis 6, dadurch gekennzeichnet, daß die Elastomerelemente (3, 4) mindestens eine Stärke von 20 bis 30 mm, vorteilhaft 25 bis 30 mm, insbesondere 27 mm aufweisen.

8. Lageranordnung nach einem der Ansprüche 1 bis 7, dadurch gekennzeichnet, daß die Elastomerelemente (3, 4) eine dynamische Federrate K von 90 bis 370 N/mm aufweisen, bei einer statischen Beanspruchung $F_m$ von 600 N und einer Amplitude der dynamischen Einfederung $1_o$ von 0,5 mm.

## Claims

1. Mounting device for a motor unit, in particular for motor vehicles, with an inner wedge-shaped metal part (1) and an outer frame-like metal part (2) arranged symmetrically spaced from the wedge-shaped metal part, with separate elastomer elements (3, 4) between the inner and the outer metal part, characterised in that the effective axes (35, 36) of the elastomer elements (3, 4) are displaced with respect to each other along the longitudinal axis of the mounting device.

2. Mounting device according to claim 1, characterised in that two identical, cuboidal elastomer elements (3, 4) are provided and the surfaces of the inner and the outer metal part (6, 7; 15, 16) for receiving the elastomer elements (3, 4) are arranged to the main axis (13) of the mounting device at an angle of 20 to 40°, preferably 25 to 35°, especially 30°.

3. Mounting device according to claim 1 or 2, characterised in that the axial displacement (o) of the elastomer elements (3, 4) is 2 to 12 mm, preferably 4 to 6 mm, especially 5 mm.

4. Mounting device according to one of the claims 1 to 3, characterised in that the length of the inner metal part (1) of the mounting is larger than the length of an elastomer element (3, 4) by two to six times the axial displacement (o), especially four times the axial displacement (o).

5. Mounting device according to one of the claims 1 to 4, characterised in that the outer metal part (2) is provided with recesses (21, 22) for connecting the metal part (2) to a vehicle part, the recesses (21, 22) being arranged at a distance from the transverse centre plane (37).

6. Mounting device according to one of the claims 1 to 5, characterised in that the inner metal part (1) has at least one or more recesses (10, 11) for connecting the metal part (1) with the drive unit, in which the recess (10, 11) runs parallel to the longitudinal axis (12) of the metal part (1).

7. Mounting device according to one of the claims 1 to 6, characterised in that the elastomer elements (3, 4) have a thickness of at least 20 to 30 mm, preferably 25 to 30 mm, especially 27 mm.

8. Mounting device according to one of the claims 1 to 7, characterised in that the elastomer elements (3, 4) have a dynamic spring ratio K of 90 to 370 N/mm, at a static stress $F_m$ of 600 N and an amplitude of the dynamic spring deflection $1_o$ of 0,5 mm.

## Revendications

1. Agencement de support pour groupe moteur d'entraînement, notamment dans des véhicules automobiles, comportant: une partie métallique intérieure en forme de coin (1); une partie métallique extérieure du genre cadre (2) disposée symétriquement par rapport à la partie métallique en forme de coin, à distance de celle-ci; et des éléments en élastomère (3, 4) séparés entre les parties métalliques intérieure et extérieure, caractérisé par le décalage mutuel des axes d'action (35, 36) des éléments en élastomère (3, 4) suivant l'axe longitudinal de l'agencement de support.

2. Agencement de support selon revendication 1, caractérisé par le fait qu'il est prévu deux éléments en élastomère parallélipipédiques (3, 4) identiques, les surfaces (6, 7; 15, 16) par lesquelles les parties métalliques intérieure et extérieure reçoivent les éléments en élastomère (3, 4) formant par rapport à l'axe principal (13) du support un angle de 20 à 40°, avantageusement de 25 à 35°, notamment de 30°.

3. Agencement de support selon revendication 1 ou 2, caractérisé par le fait que le décalage (o) des axes des éléments en élastomère (3, 4) est de 2 à 12 mm, avantageusement de 4 à 6 mm, notamment de 5 mm.

4. Agencement de support selon l'une des revendications 1 à 3, caractérisé par le fait que la longueur portante de la partie métallique intérieure (1) est plus grande que la longueur d'un élément en élastomère (3, 4) d'une valeur correspondant à deux à six fois le décalage (o) des axes, notamment à quatre fois ce décalage (o).

5. Agencement de support selon l'une des revendications 1 à 4, caractérisé par le fait que la partie métallique extérieure (2) est munie d'évidements (21, 22) pour l'assemblage de la partie métallique (2) à une partie de véhicule, les évidements (21, 22) étant situés à distance du plan médian transversal (37).

6. Agencement de support selon l'une des revendications 1 à 5, caractérisé par le fait que la partie métallique intérieure (1) présente un ou plusieurs évidements (10, 11) pour assembler la partie métallique (1) au groupe d'entraînement, l'évidement (10, 11) étant parallèle à l'axe longitudinal (12) de la partie métallique (1).

7. Agencement de support selon l'une des revendications 1 à 6, caractérisé par le fait que les éléments en élastomère (3, 4) présentent une épaisseur d'au moins 20 à 30 mm, avantageusement de 25 à 30 mm, notamment de 27 mm.

8. Agencement de support selon l'une des revendications 1 à 7, caractérisé par le fait que les éléments en élastomère (3, 4) présentent une caractéristique élastique dynamique K de 90 à 370 N/mm, pour une sollicitation statique F de 600 N et une amplitude de déformation dynamique $1_0$ de 0,5 mm.

Fig. 1

Fig. 2

Diagramm 1

Diagramm 2

Diagramm 3

Diagramm 4

• niedrig

⊙ höher

dämpfende Elastomerqualität